# DEMANDE DE BREVET EUROPEEN

(11) **EP 0 971 143 A1**
(43) Date de publication de la demande: **12.01.2000**
(21) Numéro de dépôt: 99401557.6
(22) Date de dépôt: 23.06.1999
(51) Int. Cl.: F16D 43/16

(54) **Embrayage centrifuge à inertie pour un actionneur électrique d'une serrure d'ouvrant de véhicule automobile**

(30) Priorité: 07.07.1998 FR 9808667
(71) Demandeur: VALEO SECURITE HABITACLE, 94000 Créteil (FR)
(72) Inventeur: Lefebvre, Jean-Marie, 80580 Epagnette (FR); Dupont, Patrick, 80133 Noyelles sur Mer (FR); Hochart, Jean-Philippe, 80132 Buigny-l'Abbe (FR)
(74) Mandataire: Peuscet, Jacques

(57) **Abrégé**

Embrayage centrifuge à inertie comportant un support (10) destiné à être solidarisé en rotation avec un arbre moteur et portant au moins deux masselottes mobiles (19) et un tambour creux (13) qui est coaxial à l'arbre moteur et porte à une extrémité un pignon (15) pour l'entraînement d'un mécanisme d'engrenage, de façon à loger dans le tambour la partie (12) du support équipée des masselottes mobiles ; chaque masselotte est un cliquet (19) articulé sur le support en un point (21) décalé par rapport à l'axe de l'arbre moteur, de façon à permettre à un bras actif (19a) du cliquet de pivoter entre les positions rétractée et déployée sous l'action de la force centrifuge engendrée par la rotation de l'arbre moteur ; au moins l'un des cliquets est apte à pivoter dans le sens horaire, alors que l'autre pivote dans le sens anti-horaire, sous l'action de la force centrifuge, pour permettre l'embrayage quel que soit le sens de rotation de l'arbre moteur.

## Description

La présente invention concerne un embrayage centrifuge à inertie pour un actionneur électrique d'une serrure d'ouvrant de véhicule automobile, notamment pour un actionneur électrique de commande d'ouverture et/ou de condamnation/décondamnation de la serrure.

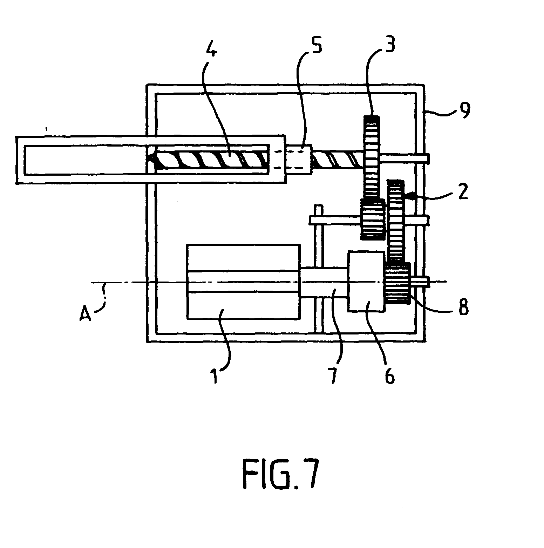

On connaît par le brevet français n° 2 594 507 un embrayage centrifuge pour actionneur de condamnation d'une serrure de porte de véhicule automobile, dont l'implantation générale est représentée sur la figure 7. Cet embrayage centrifuge est destiné à être interposé entre un moteur électrique 1 d'axe A et un train d'engrenage 2 dont le dernier pignon 3 est fixé coaxialement à une vis 4 sur laquelle est monté un manchon taraudé 5 pour la commande d'un organe de condamnation de la serrure, cet embrayage comportant des masselottes disposées dans une cloche 6 radialement à l'arbre de sortie 7 du moteur, lesdites masselottes étant soumises à l'action d'organes élastiques de rappel vers une position débrayée au repos et étant susceptibles d'être entraînées par la rotation de l'arbre 7 du moteur dans une position d'embrayage où elles sont en prise avec la cloche 6, cette dernière étant munie d'un pignon 8 pour l'entraînement du train d'engrenage 2, lesdites masselottes étant montées dans un support constitué par un moyeu pourvu de deux branches sensiblement axiales entourant les masselottes en délimitant un logement pour celles-ci, et par un couvercle fermant ce logement, fixé sur le moyeu, ce couvercle et le moyeu étant agencés pour permettre le déplacement radial des masselottes vers la cloche 6 sous l'effet de la force centrifuge. L'ensemble des pièces précitées sont disposées dans un boîtier 9.

L'invention a pour but de proposer un autre type d'embrayage centrifuge à inertie qui soit de structure simple et fiable en fonctionnement.

A cet effet, l'invention a pour objet un embrayage centrifuge à inertie pour un actionneur électrique d'une serrure d'ouvrant de véhicule automobile, ledit embrayage comportant, d'une part, un support destiné à être solidarisé en rotation avec un arbre moteur et portant au moins deux masselottes mobiles, et, d'autre part, un tambour creux coaxial à l'arbre moteur et portant à une extrémité un pignon pour l'entraînement d'un mécanisme d'engrenage pour l'actionnement d'un organe de la serrure, ledit tambour présentant du côté opposé au pignon un fond ouvert tourné vers le support, de façon à loger dans le tambour la partie du support équipée des masselottes mobiles, chaque masselotte étant apte à se déplacer entre une position débrayée, dans laquelle la masselotte est en position rétractée par rapport à une denture prévue sur la périphérie interne du tambour lorsque l'arbre moteur est au repos, et une position embrayée, dans laquelle la masselotte est en position déployée en prise avec ladite denture lorsque l'arbre moteur est entraîné en rotation dans un sens ou dans l'autre à une vitesse suffisante, caractérisé par le fait que chaque masselotte est un cliquet articulé sur le support en un point décalé par rapport à l'axe de l'arbre moteur, de façon à permettre à un bras actif du cliquet de pivoter entre les positions rétractée et déployée sous l'action de la force centrifuge engendrée par la rotation de l'arbre moteur, au moins l'un des cliquets étant apte à pivoter dans le sens horaire alors que l'autre pivote dans le sens anti-horaire, sous l'action de la force centrifuge, pour permettre l'embrayage quel que soit le sens de rotation de l'arbre moteur. L'organe de la serrure peut être un levier d'ouverture ou un levier de condamnation.

Avantageusement, les cliquets sont agencés symétriquement sur le support par rapport à un plan passant par l'axe de l'arbre moteur.

Selon une autre caractéristique, la denture interne du tambour est formée par un secteur angulaire radialement en saillie vers l'intérieur, les bords latéraux du secteur angulaire étant de préférence biseautés pour venir en contact avec une surface active conjuguée sur le bras actif du cliquet en position embrayée.

Selon encore une autre caractéristique, les bras des cliquets opposés à leur bras actif par rapport à leur axe d'articulation respectif sont reliés par un ressort commun pour rappeler les cliquets en position débrayée.

Dans une forme de réalisation particulière, chaque cliquet présente à l'extrémité libre de son bras actif une surépaisseur s'étendant dans une direction parallèle à l'arbre moteur, de part et d'autre du plan moyen du cliquet, pour concentrer la masse du cliquet à l'extrémité libre du bras actif.

Chaque cliquet peut présenter une forme sensiblement plane en croissant de lune dont le profil radialement extérieur est sensiblement en arc de cercle centré sur l'axe de l'arbre moteur en position débrayée.

Dans une forme de réalisation préférée, le support est constitué d'un plateau coaxial à l'arbre moteur et d'un moyeu prévu en saillie au centre de la face du plateau tournée vers le tambour, ledit moyeu comportant des moyens de retenue sur sa périphérie pour y retenir les axes d'articulation des cliquets, le moyeu étant dimensionné de manière à permettre le débattement des cliquets entre leurs positions rétractée et déployée.

Avantageusement, le moyeu comporte une avancée radiale s'étendant sensiblement le long dudit plan de symétrie des cliquets, pour servir de butée de fin de course des bras actifs des cliquets vers leur position rétractée.

Dans une première variante, les moyens de retenue sont constitués par des logements ouverts sur la périphérie du moyeu pour y loger partiellement les cliquets.

Dans une autre variante, les moyens de retenue sont constitués par au moins une paire de branches flexibles s'étendant sensiblement radialement, les axes d'articulation des cliquets étant portés par l'extrémité libre respective desdites branches. Avantageusement, lesdites branches s'étendent en direction diamétralement opposées, par rapport audit plan de symétrie.

Les branches flexibles sont destinées à se déformer élastiquement lors du choc de fin de course d'embrayage du cliquet, ce qui permet d'absorber une partie de l'énergie à dissiper, et de ce fait, contribue à diminuer les contraintes engendrées dans les dentures d'engrenage.

Selon encore une autre caractéristique, l'extrémité libre de chaque branche porte des moyens d'agrafage libérables des axes d'articulation des cliquets.

Avantageusement, chaque branche du moyeu comporte deux bras parallèles espacés l'un de l'autre dans la direction axiale pour loger entre eux le corps plan du cliquet qui porte de part et d'autre de son plan moyen un tronçon d'axe d'articulation.

Pour mieux faire comprendre l'objet de l'invention, on va en décrire maintenant, à titre d'exemples purement illustratifs et non limitatifs, deux modes de réalisation représentés sur le dessin annexé.

Sur ce dessin :
- la figure 1 est une vue en perspective éclatée d'un premier mode de réalisation de l'embrayage de l'invention ;
- la figure 2 représente l'embrayage assemblé de la figure 1 en position de repos débrayée, la demi-vue de gauche étant une coupe par un plan perpendiculaire à l'arbre moteur et passant par un cliquet, la demi-vue de droite étant une vue en plan de dessus suivant la flèche II de la figure 1;
- la figure 3 est une vue analogue à la figure 2, représentant une position d'embrayage, lorsque l'arbre moteur est entraîné dans le sens anti-horaire ;
- la figure 4 est une vue en perspective éclatée d'un autre mode de réalisation de l'embrayage de l'invention ;
- la figure 5 représente l'embrayage assemblé de la figure 4 en position de repos débrayée, la demi-vue de gauche étant une coupe par un plan perpendiculaire à l'arbre moteur et passant par un cliquet, la demi-vue de droite étant une vue en plan de dessus suivant la flèche V de la figure 4 ;
- la figure 6 est une vue analogue à la figure 5, représentant une position embrayée, dans laquelle l'arbre moteur est entraîné dans le sens horaire ; et
- la figure 7 est une vue en plan et de dessus de l'implantation générale d'un embrayage centrifuge connu dans un boîtier de serrure.

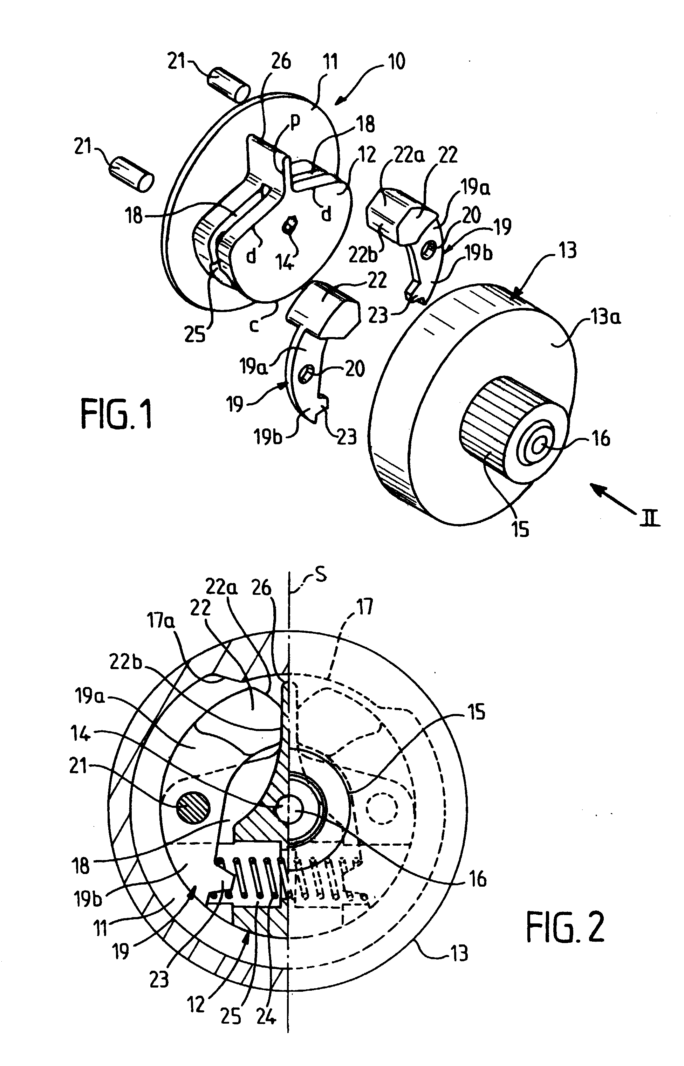

En se référant à l'exemple de réalisation illustré sur les figures 1 à 3, l'embrayage comporte un support 10 constitué d'un plateau circulaire 11 s'étendant dans un plan perpendiculaire à l'axe A et d'un moyeu central 12 qui fait axialement saillie sur la face du plateau 11 tournée vers un tambour 13. Le plateau 11 et le moyeu 12 comportent un passage central traversant 14 présentant une section transversale polygonale, par exemple octogonale, dans lequel est inséré un tronçon cannelé complémentaire de l'arbre de sortie 7 du moteur électrique 1.

Le tambour 13 est de forme cylindrique circulaire creuse ayant un fond ouvert tourné vers le support 10 et un fond opposé fermé 13a sur lequel est monté un pignon 15. Le fond 13a du tambour 13 et le pignon 15 comportent un passage traversant 16 de section transversale circulaire pour recevoir à rotation un tronçon terminal complémentaire de l'arbre moteur 7. Autrement dit, l'arbre moteur 7 traverse la totalité de l'embrayage, c'est-à-dire, le plateau 11, le moyeu 12, le fond 13a du tambour 13 et le pignon 15. L'extrémité terminale de l'arbre moteur 7 est insérée dans un palier de support (non représenté) prévu sur le boîtier de serrure. A titre d'exemple, le tambour 13 et son pignon 15 correspondent à la cloche 6 et au pignon 8 de la serrure connue illustrée sur la figure 7.

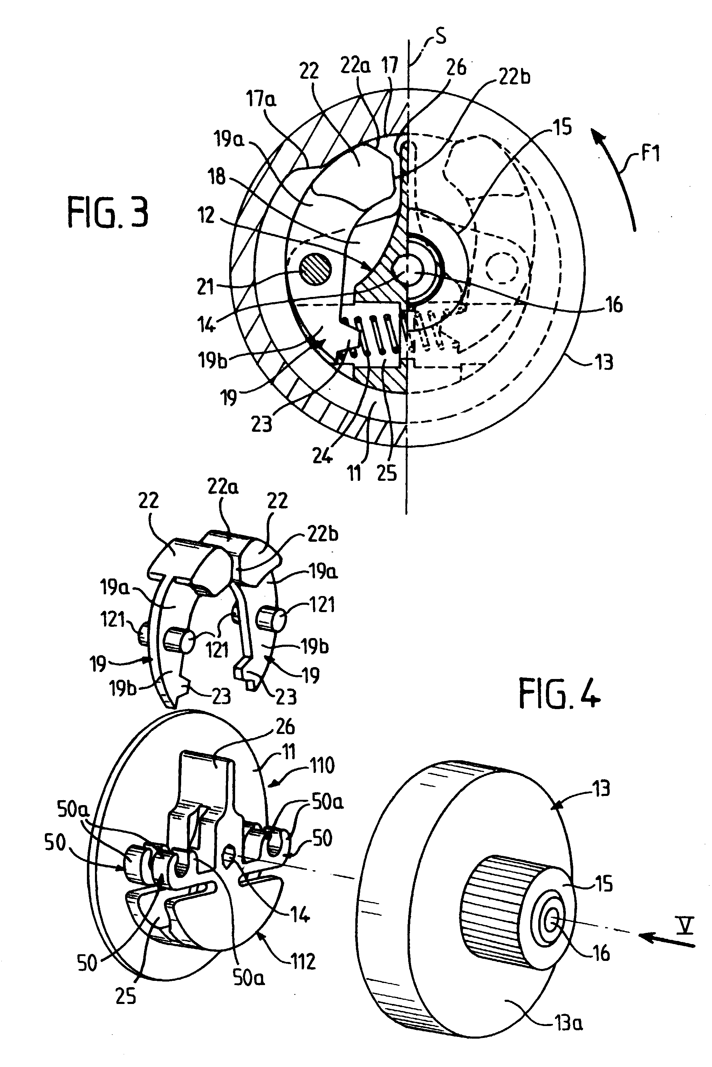

Comme visible sur les figures 2 et 3, le tambour 13 comporte sur sa périphérie interne une denture 17 radialement en saillie vers l'intérieur, s'étendant sur un secteur angulaire dont les bords latéraux 17a sont biseautés pour les raisons expliquées plus loin. Bien entendu, on pourrait prévoir en variante plusieurs dentures de ce type réparties sur la périphérie interne du tambour 13.

Le moyeu 12 présente une forme sensiblement cylindrique dont la droite génératrice est parallèle à l'axe A et dont la courbe directrice est constituée d'un arc de cercle c centré sur l'axe A et s'étendant sur un angle légèrement supérieur à 180°, de deux segments de droite d s'étendant respectivement à partir d'une extrémité de l'arc de cercle c jusqu'au voisinage du centre du moyeu en s'écartant légèrement de l'arc de cercle c, et d'un profil p en U inversé dont les extrémités libres se raccordent respectivement aux deux segments de droite d, le fond du U s'étendant radialement à distance de l'axe A. Le moyeu 12 présente un plan de symétrie S passant par l'axe A et par la bissectrice de l'arc de cercle c.

Le moyeu 12 comporte de part et d'autre de son plan de symétrie S un logement 18 sensiblement à mi-hauteur dans la direction axiale, pour y loger partiellement un cliquet 19. Chaque cliquet 19 présente sensiblement une forme plate en croissant de lune dont le profil extérieur est convexe et le profil intérieur concave. Un trou 20 est prévu sensiblement au centre du cliquet 19 pour recevoir un axe d'articulation 21 qui est ajusté à travers le moyeu 12 dans la direction axiale. Le cliquet 19 présente à l'extrémité libre de son bras 19a une masselotte 22 définissant une surépaisseur de part et d'autre de son plan moyen, ladite masselotte comportant une surface active 22a et une surface de butée 22b, comme expliqué plus loin. Le bras opposé 19b du cliquet 19 comporte un pion saillant 23 sensiblement trapézoïdal dont la petite base est tournée vers l'intérieur du moyeu 12, pour servir de pion de centrage et de retenue pour une spire d'extrémité d'un ressort de rappel 24 commun aux deux cliquets 19. Ce ressort commun 24 est logé dans un passage 25 ménagé à travers le moyeu 12 dans une direction transversale perpendiculaire au plan de symétrie S et du côté opposé, par rapport à l'axe A, à l'avancée 26 constituée par le profil p en U.

On voit sur la figure 1 que les axes d'articulation 21 sont introduits par le dessous du plateau 11 et ne débouchent pas sur la surface opposée du moyeu 12.

On va maintenant décrire le fonctionnement de l'embrayage illustré sur les figures 1 à 3.

Dans la position de repos illustrée sur la figure 2, les deux cliquets 19 qui sont disposés symétriquement par rapport au plan de symétrie S, viennent en contact par leur surface de butée respective 22b de leur bras actif 19a de part et d'autre de l'avancée 26 du moyeu 12. Dans cette position, on constate que le profil extérieur convexe de chaque cliquet 19 épouse le profil en arc de cercle c du moyeu 12, de manière à conférer à l'ensemble du moyeu 12 et des cliquets 19 un profil globalement cylindrique circulaire. Dans cette position, le ressort de compression 24 prend une direction générale sensiblement perpendiculaire au plan de symétrie S. Les cliquets 19 étant dans leur position rétractée, ils ne peuvent coopérer avec la denture 17 sur la périphérie interne du tambour 13.

Lorsque l'arbre moteur 7 est entraîné en rotation à une vitesse suffisante, par exemple dans la direction de la flèche F1 sur la figure 3, les masselottes 22 des cliquets 19 sont entraînées par la force centrifuge vers la périphérie interne du tambour 13, en faisant pivoter les cliquets 19 sur leur axe d'articulation respectif 21. Comme les deux cliquets 19 sont disposés symétriquement par rapport au plan S, ils pivotent en sens contraire l'un de l'autre. Ainsi, seul l'un des deux cliquets 19 vient en prise avec la denture 17 lors de la rotation de l'arbre moteur dans un sens donné, l'autre cliquet étant inactif, comme représenté sur la figure 3. Le cliquet 19, qui assure l'embrayage, prend appui par sa surface active 22a contre le bord biseauté correspondant 17a de la denture 17. Comme ce bord 17a est biseauté, on augmente la surface de contact avec la surface active 22a du cliquet 19. On comprendra que si l'arbre moteur est entraîné en sens inverse, l'autre cliquet assurera l'embrayage, alors que le premier cliquet deviendra à son tour inactif. Au cours du basculement des cliquets 19, leurs bras 19b basculent vers l'intérieur du passage 25, à l'encontre de la force de rappel du ressort 24. Lorsqu'un cliquet 19 est en prise avec la denture 17, l'autre cliquet 19 prend appui sur la surface radialement la plus interne de la denture 17, de sorte que le cliquet actif est en position davantage basculée que le cliquet inactif. Dès lors, le ressort 24 prend une position légèrement inclinée par rapport à sa direction au repos. Le passage 25 est dimensionné de manière à permettre une telle inclinaison du ressort 24.

En supposant maintenant qu'au début de la rotation de l'arbre moteur, la denture 17 ne soit pas en vis-à-vis des masselottes 22 des cliquets 19, les deux cliquets 19 basculent alors dans leur position déployée maximale, puis, l'un des cliquets 19 vient glisser contre le bord 17a de la denture 17, ce qui provoque une légère rétractation, jusqu'à ce que ce même bord 17a vienne en contact avec la surface active 22a de l'autre cliquet 19.

On va maintenant se référer aux figures 4 à 6 qui représentent une autre variante de réalisation de l'embrayage de l'invention, dans laquelle les éléments identiques portent les mêmes chiffres de référence.

Le support 110 comporte également un plateau 11, mais le moyeu 112 a une forme différente. En vue de dessus, le moyeu 112 a une forme globalement en T inversé, dont la jambe du T constitue l'âme centrale du moyeu et définit à son extrémité libre l'avancée 26 précitée. La barre du T est en forme de secteur angulaire. En outre, l'âme centrale du moyeu 112 comporte une paire de branches 50 qui s'étendent sensiblement perpendiculairement au plan de symétrie S et de part et d'autre de ce dernier. Les deux bras de chaque branche 50 sur un même côté du plan de symétrie S sont parallèles entre eux et espacés dans la direction axiale. Chaque bras d'une branche 50 est flexible sur au moins une portion à partir de son extrémité libre qui comporte une paire de mâchoires 50a définissant un logement dont l'angle dièdre est supérieur à 180°, pour permettre l'agrafage libérable de l'axe d'articulation 121 du cliquet 19. L'axe d'articulation 121, contrairement à l'axe 21 du premier mode de réalisation, est ici solidaire du cliquet, et fait saillie de part et d'autre de son plan moyen, ce qui évite l'opération de montage/démontage d'un axe d'articulation séparé. Le cliquet 19 avec son axe d'articulation intégré 121 est encliqueté de manière libérable sur les deux bras d'une branche 50.

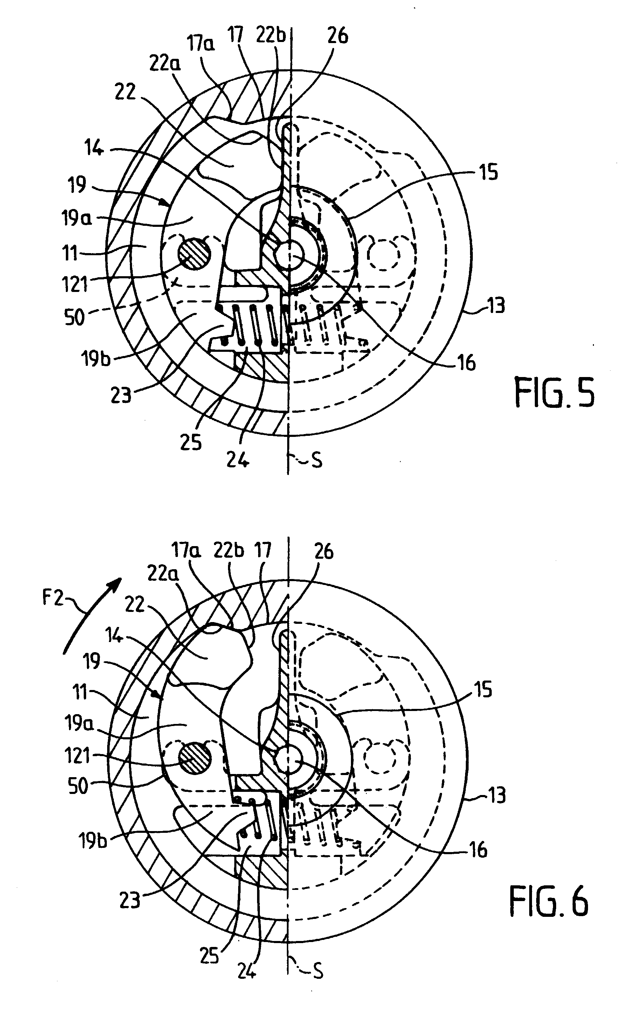

Le fonctionnement du deuxième mode de réalisation est sensiblement le même que celui du premier mode, sauf que sur la figure 6, l'arbre moteur est entraîné dans le sens horaire indiqué par la flèche F2. Dans ce cas, c'est le cliquet gauche sur la figure 6 qui vient en prise avec la denture 17, le cliquet droit étant inactif.

Etant donné que les branches 50, qui servent de palier à l'axe d'articulation 121 des cliquets 19, sont flexibles, lorsque le cliquet 19 vient en prise avec la denture 17, le choc de fin de course résultant est absorbé en partie par une déformation élastique des branches 50, ce qui réduit les contraintes dans les dentures du mécanisme d'engrenage, ainsi que les nuisances sonores.

Bien que l'invention ait été décrite en liaison avec deux modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Embrayage centrifuge à inertie pour un actionneur électrique (1) d'une serrure d'ouvrant de véhicule automobile, ledit embrayage comportant, d'une part, un support (10, 110) destiné à être solidarisé en rotation avec un arbre moteur (7) et portant au moins deux masselottes mobiles (19), et, d'autre part, un tambour creux (13) coaxial à l'arbre moteur et portant à une extrémité un pignon (15) pour l'entraînement d'un mécanisme d'engrenage (2) pour l'actionnement d'un organe de la serrure, ledit tambour présentant du côté opposé au pignon un fond ouvert tourné vers le support, de façon à loger dans le tambour la partie (12, 112) du support équipée des masselottes mobiles, chaque masselotte étant apte à se déplacer entre une position débrayée, dans laquelle la masselotte est en position rétractée par rapport à une denture (17) prévue sur la périphérie interne du tambour lorsque l'arbre moteur est au repos, et une position embrayée, dans laquelle la masselotte est en position déployée en prise avec ladite denture lorsque l'arbre moteur est entraîné en rotation dans un sens ou dans l'autre à une vitesse suffisante, caractérisé par le fait que chaque masselotte est un cliquet (19) articulé sur le support en un point (21, 121) décalé par rapport à l'axe (A) de l'arbre moteur (7), de façon à permettre à un bras actif (19a) du cliquet de pivoter entre les positions rétractée et déployée sous l'action de la force centrifuge engendrée par la rotation de l'arbre moteur, au moins l'un des cliquets étant apte à pivoter dans le sens horaire alors que l'autre pivote dans le sens anti-horaire, sous l'action de la force centrifuge, pour que seul l'un des cliquets vienne en prise avec la denture (17), lors de la rotation de l'arbre moteur dans un sens donné, l'autre cliquet étant inactif.

2. Embrayage selon la revendication 1, caractérisé par le fait que les cliquets (19) sont agencés symétriquement sur le support (10, 110) par rapport à un plan (S) passant par l'axe (A) de l'arbre moteur (7).

3. Embrayage selon la revendication 1 ou 2, caractérisé par le fait que la denture interne du tambour (13) est formée par un secteur angulaire (17) radialement en saillie vers l'intérieur.

4. Embrayage selon la revendication 3, caractérisé par le fait que les bords latéraux (17a) du secteur angulaire (17) sont biseautés et destinés à venir en contact avec une surface active conjuguée (22a) sur le bras actif (19a) du cliquet (19) en position embrayée.

5. Embrayage selon l'une des revendications 1 à 4, caractérisé par le fait que les bras (19b) des cliquets (19) opposés à leur bras actif (19a) par rapport à leur axe d'articulation respectif (21, 121) sont reliés par un ressort commun (24) pour rappeler les cliquets en position débrayée.

6. Embrayage selon l'une des revendications 1 à 5, caractérisé par le fait que chaque cliquet (19) présente à l'extrémité libre de son bras actif (19a) une surépaisseur (22) s'étendant dans une direction parallèle à l'arbre moteur (7), de part et d'autre du plan moyen du cliquet, pour concentrer la masse du cliquet à l'extrémité libre du bras actif.

7. Embrayage selon l'une des revendications 1 à 6, caractérisé par le fait que chaque cliquet (19) présente une forme sensiblement plane en croissant de lune dont le profil radialement extérieur est sensiblement en arc de cercle centré sur l'axe (A) de l'arbre moteur (7) en position débrayée.

8. Embrayage selon l'une des revendications 1 à 7, caractérisé par le fait que le support (10, 110) est constitué d'un plateau (11) coaxial à l'arbre moteur (7) et d'un moyeu (12, 112) prévu en saillie au centre de la face du plateau tournée vers le tambour (13), ledit moyeu comportant des moyens de retenue (18, 50) sur sa périphérie pour y retenir les axes d'articulation (21, 121) des cliquets (19), le moyeu étant dimensionné de manière à permettre le débattement des cliquets entre leurs positions rétractée et déployée.

9. Embrayage selon les revendications 2 et 8 en combinaison, caractérisé par le fait que le moyeu (12, 112) comporte une avancée radiale (26) s'étendant sensiblement le long dudit plan de symétrie (S) des cliquets (19), pour servir de butée de fin de course des bras actifs (19a) des cliquets vers leur position rétractée.

10. Embrayage selon la revendication 8 ou 9, caractérisé par le fait que les moyens de retenue sont constitués par des logements (18) ouverts sur la périphérie du moyeu (12) pour y loger partiellement les cliquets (19).

11. Embrayage selon la revendication 8 ou 9, caractérisé par le fait que les moyens de retenue sont constitués par au moins une paire de branches flexibles (50) s'étendant sensiblement radialement, les axes d'articulation (121) des cliquets (19) étant portés par l'extrémité libre respective (50a) desdites branches.

12. Embrayage selon les revendications 2 et 11 en combinaison, caractérisé par le fait que lesdites branches s'étendent en direction diamétralement opposées, par rapport au plan de symétrie (S) précité.

13. Embrayage selon l'une des revendications 11 et 12, caractérisé par le fait que l'extrémité libre de chaque branche (50) porte des moyens d'agrafage libérables (50a) des axes d'articulation (121) des cliquets (19).

14. Embrayage selon l'une des revendications 11 à 13, caractérisé par le fait que chaque branche (50) du moyeu (112) comporte deux bras parallèles espacés l'un de l'autre dans la direction axiale pour loger entre eux le corps plan du cliquet (19) qui porte de part et d'autre de son plan moyen un tronçon d'axe d'articulation (121).

15. Embrayage selon la revendication 3 ou 4, caractérisé par le fait que lorsqu'un cliquet est en prise avec la denture (17), l'autre cliquet inactif prend appui sur la surface radialement la plus interne de la denture, dans une position moins basculée que le cliquet actif.
